# EUROPEAN PATENT APPLICATION

(11) **EP 1 338 535 A2**
(43) Date of publication of application: **27.08.2003**
(21) Application number: 03002897.1
(22) Date of filing: 10.02.2003
(51) Int. Cl.: B65G 47/14

(54) **Feeding and loading device for items of jewelry, in particular spherical or elliptical or tubular items or the like**

(30) Priority: 12.02.2002 IT VR20020012
(71) Applicant: Faimond S.r.l., 36057 Arcugnano, Vicenza (IT)
(72) Inventor: Dal Lago, Gianluigi, 36057 Arcugnano (Vicenza) (IT)
(74) Representative: Savi, Alberto

(57) **Abstract**

The device according to the present invention permits to automatically load essentially spherical or elliptical or tubular items of jewelry or the like on feeding means. In addition, this device semplifies the automated loading operations. These operations were previously accomplished only by utilizing very complex expensive means and involved several phases.

The present device is equipped with a loading unit (3) that comprises a horizontally pivoted runner (5). This runner is hollow internally and receives the spherical elements that are expelled selectively, one by one, through an upper outlet (6).

## Description

The present industrial invention proposes a feeding and loading device that permits to automatically feed items of jewelry, in particular essentially spherical or elliptical or tubular elements of jewelry o shaped objects or the like.

The device according to the present invention permits to automatically load essentially spherical or elliptical or tubular items of jewelry or the like on feeding means. In addition, this device semplifies the automated loading operations. These operations were previously accomplished only by utilizing very complex expensive means and involved several phases.

In comparison with the known solutions, the device according to the present invention proposes to develop a technique for the delivery of spherical elements, which technique permits to eliminate many mechanical components, to reduce the loading time and to simplify the path for the piece to be worked.

As is known, in the field of jewelry and costume jewelry there are provided machine tools that permit to execute works of any kind on the surface of the jewelry item o whatever element to be worked with diamond processes.

In the aforesaid field there are provided diamond machines that work essentially spherical or elliptical jewelry items or items showing different shapes such as beads of necklaces or other similar objects. In general, the said machines comprise two units, namely, a unit for the support of the piece to be worked and a unit for the working of the piece. Both units are movable and are provided with moving means that are synchronized mutually.

When the pieces to be worked are spherical, the lower supporting unit consists in general of a pair of points that face each other and rotate in synchronism so as to have the supported piece rotated while the tool works the surface of the piece.

However, the said machines involve the problem of feeding the beads on the counterpoints.

Now, the spherical objects are fed onto the supporting counterpoints by utilizing special gripping elements arranged on a piston and fed in turn by delivery means represented by a plurality of components arranged in series.

The said components may be represented by an upper vibrator, a positioning passage, a selector, a gate, pliers or a manipulator and a passage element that reaches the piece-holder.

It is evident that this type of feeding is very complex for the running of plant and gripping moving mechanisms. The productivity of the working cycles is low especially when considering that all the passages must be repeated for each spherical or cylindrical or elliptical item of jewelry to be inserted in the piece-holder.

The aim of the present invention is to eliminate the aforesaid inconvenience by utilizing a device which is simple as concerns concept and realization and is provided with automatic delivery components which are able to simplify the feeding and mounting operations for the beads or the like on the counterpoints or whatever holding device which holds the beads to be worked.

Another aim of the present invention is to propose a feeding system which is carried out with few very simple components which facilitate and speed the working phases of each single piece since the feeding path is simplified. All the above-described aims and advantages are reached according to the present invention by a feeding device which feeds essentially spherical or elliptical or tubular or shaped items of jewelry to diamond machines or the like, characterized in that it is provided with a vibrating feeding container in the upper part of which, i.e. in the part where the beads go out, there is provided a delivery unit which shows a horizontally pivoted loading and selecting runner moved by a moving element such as a piston or the like which permits the loading runner itself to be shifted from a lowered position to a lifted position in which the runner intercepts a transferring element such as a vacuum tube provided with a gripping mechanical hand which can transfer the spherical object onto the holding device of a diamond machine or the like.

Further features and details of the present invention will be better understood from the following specification which is given as a non-exclusive example with reference to the accompanying drawing wherein:
- Fig. 1 is a schematic front view of a feeding device according to the invention as a whole; and
- Fig. 2 is a schematic lateral view of the feeding device.

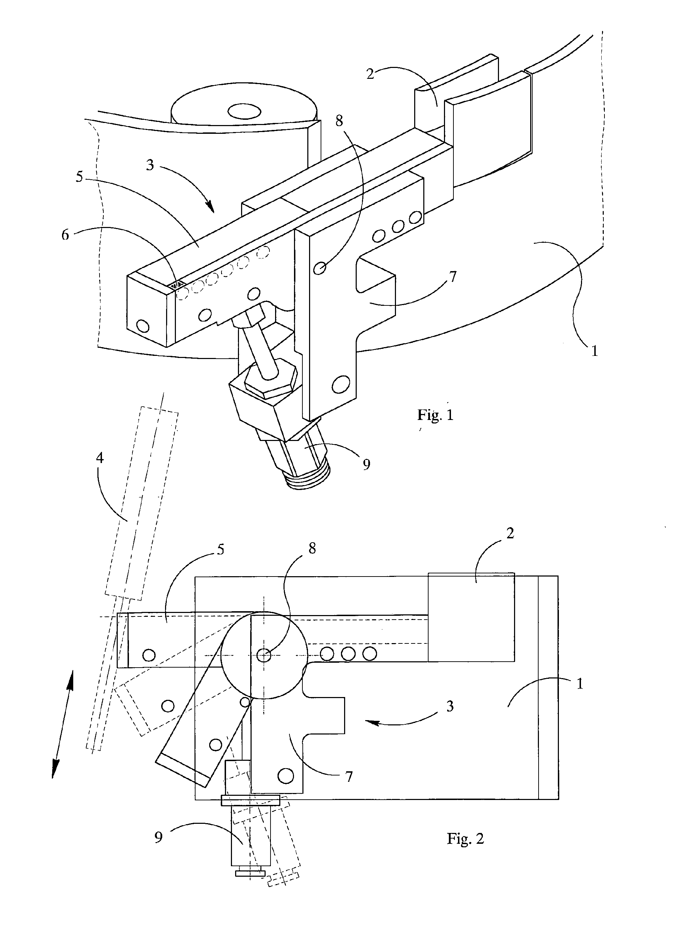

With reference to the accompanying drawing, number 1 denotes a feeding device as a whole. The feeding device 1 comprises a container in which spherical jewelry objects or the like to be diamond-cut are contained.

The said container is provided with a vibrator which causes the spherical objects to move upwards so as to reach a neck 2 through which the spherical objects go out.

A loading unit 3 is arranged on the neck 2 and receives each spherical object. The loading unit 3 sends each spherical object to a loading piston 4 or a vacuum tube or a mechanical hand or other device which can send the spherical objects to the counterpoints of a diamond machine or to other gripping device for the diamond-cut phases.

In general, the loading unit 3 comprises a horizontally pivoted runner which is hollow and can receive the spherical elements and expell them, one by one, selectively through an upper outlet 6.

The horizontally pivoted runner 5 is pivoted to a supporting stirrup 7 in a pivoting point 8 and is moved by a piston 9 or whatever suitable actuating element which is provided with a limit switch or other known adjusting devices.

The horizontally pivoted runner 5 is moved from a lowered position to a lifted position in which the runner 5 intercepts a transferring element 4 such as a vacuum tube or a hand element or other element which is able to transfer the spherical object onto a detaining device of a diamond machine.

The movement of the horizontally pivoted runner 5 has been conceived and realized to permit the transferring element 4 to have a free room of action so that it can reach a gripping unit which grips the item of jewelry in the diamond machine.

For the loading of oblong elements such as small tubes or similar elements there is the possibility that the whole feeding unit and the relevant vibrator be mounted on a rotating stirrup, which rotates the feeding system for 90 degrees so that the small tubes or similar elements are arranged in their correct position before being fed to the vacuum tube or mechanical gripping hand device of the transferring element 4.

Advantageously, the whole horizontally pivoted runner 5 may be removed from the loading vibrating body 1 and positioned on a suitable independent support so that the runner may be mounted on another different feeding device.

As it can be seen, the present feeding system does simplify the conventional loading system for the loading of spherical or elliptical or tubular or shaped objects of jewelry on the gripping device of a diamond machine. As a matter of fact, known components such as the positioning runner, the selector, the gate and other related elements are replaced with an only component, namely, the horizontally pivoted runner 5 and the loading phases are much simplified.

A technician of the field can make changes and variants in the feeding device that has been described and represented as a preferred embodiment and obtain solutions that are to be considered as included in the scope of protection of the invention as further explained in the following claims.

## Claims

1. Device for the feeding of essentially spherical or elliptical or tubular or shaped items of jewelry to diamond machines or the like, **characterized in that** it is provided with a feeding vibrating container (1) for the spherical objects and a supplying unit (3) which is arranged in the upper part of the container itself where the spherical objects or beads go out; the supplying unit (3) is equipped with a horizontally pivoted loading and selecting runner (5) which is controlled by a moving element (9) such as a piston or the like which permits the loading runner to be moved from a lowered position to a lifted position in which the runner intercepts a transferring element such as a vacuum tube with a gripping mechanical hand or other element which is able to selectively transfer the spherical object or bead to the detaining device of a diamond machine or the like.

2. Device for the feeding of essentially spherical or tubular items of jewelry or the like as claimed in the foregoing claim, **characterized in that** the said supplying or loading unit (3) is arranged next to a neck (2) through which the pieces coming from the vibrator pass; the supplying unit (3) is so shaped that it receives the spherical elements, one by one, and supplies them to a loading piston (4) or a vacuum tube or a mechanical hand or other device which transfers the beads to counterpoints of a diamond machine or to whatever gripping device so that they are subjected to the diamond-cut phases.

3. Device for the feeding of essentially spherical or tubular items of jewelry or the like as claimed in the foregoing claims, **characterized in that** in general, the said supplying or loading unit (3) comprises a horizontally pivoted hollow runner (5) which receives the spherical objects or beads and expell them selectively, one by one, through an exit mouth (6) which is arranged on its upper part.

4. Device for the feeding of essentially spherical or tubular items of jewelry or the like as claimed in the foregoing claims, **characterized in that** the said horizontally pivoted runner (5) is pivoted on a supporting stirrup (7) in a pivoting point (8) and is moved by a piston (9) or whatever suitable actuating device which is provided with a limit switch or other known adjusting devices.

5. Device for the feeding of essentially spherical or tubular items of jewelry or the like as claimed in the foregoing claims, **characterized in that** the said horizontally pivoted runner (5) is moved from a lowered position to a lifted position in which the runner itself intercepts a transferring element (4) such as a vacuum tube provided with a hand or other which transfers the bead to the detaining device of the diamond machine.

6. Device for the feeding of essentially spherical or tubular items of jewelry or the like as claimed in the foregoing claims, **characterized in that** for the loading of oblong objects such as small tubes or the like there is provided the possibility that the whole feeding unit along with the related vibrator be mounted on a rotating stirrup which rotates the feeding system of 90 degrees so that the small tubes are arranged in their correct position before being fed to the vacuum tube or mechanical gripping hand device of the transferring element (4).
